# Europäisches Patentamt
## European Patent Office
### Office européen des brevets

(19)

(11) Veröffentlichungsnummer: **0 035 207**
**B1**

(12)

# EUROPÄISCHE PATENTSCHRIFT

(45) Veröffentlichungstag der Patentschrift:
**06.06.84**

(51) Int. Cl.³: **G 01 M 10/00**

(21) Anmeldenummer: **81101298.8**

(22) Anmeldetag: **23.02.81**

(54) Verfahren zum Aufzeichnen von Strömungsgrenzschichten in flüssigen Medien.

(30) Priorität: **04.03.80 DE 3008260**

(43) Veröffentlichungstag der Anmeldung:
**09.09.81 Patentblatt 81/36**

(45) Bekanntmachung des Hinweises auf die Patenterteilung:
**06.06.84 Patentblatt 84/23**

(84) Benannte Vertragsstaaten:
**AT CH DE FR GB LI NL SE**

(56) Entgegenhaltungen:
**DE - A - 2 102 584**
**DE - A - 2 445 398**
**DE - A - 2 659 693**
**DE - B - 2 133 835**
**DE - C - 2 133 834**

(73) Patentinhaber: **SIEMENS AKTIENGESELLSCHAFT,
Berlin und München Wittelsbacherplatz 2,
D-8000 München 2 (DE)**

(72) Erfinder: **Urban, Gerd, Stettiner Strasse 22,
D-8520 Erlangen (DE)**
Erfinder: **Opitz, Heinrich, Dipl.-Chem., Breslauer
Strasse 1, D-8520 Erlangen (DE)**
Erfinder: **Mages, Gert, Dr., Grabenäcker 5,
D-8551 Hemhofen (DE)**

EP 0 035 207 B1

## Beschreibung

Die Erfindung betrifft ein Verfahren zum Aufzeichnen von Strömungsgrenzschichten in flüssigen Medien auf photochemischem Wege.

Mit dem Aufzeichnen der Strömungsfelder bei flüssigem Strömungsmedium befaßte sich F. GUTSCHE, J. Schiffbautechn. Ges. 41 (1940) 188—220. Bei gerasterter punkt- oder strichförmiger Auftragung wurde ein emulgierendes Anstrichmittel aus Leinölfirnis, Türkischrotöl und Kienruß auf weißem Untergrund benutzt. Ein wesentlicher Stoffübergang war damit aber nicht verbunden. Vielmehr handelte es sich um eine mechanisch wirkende Anzeige von Strömungsrichtung und -stärke. Mit diffundierenden Feststoffen unter Wasser konnten Grenzschichtumschlagslinien sichtbar gemacht werden (J. D. MAIN-SMITH A.R.C. Tech. Report R. & M. No 2755, Febr., (1950) 1—16). Die Geschwindigkeiten am Modell entsprachen bis zu $10^1/_2$ Knoten $\cong$ 5,4 m/s für ein 125 m langes Schiff. Mit einer Auflösung von Benzoesäure in Wasser arbeiteten S. K. STYNES, J. E. MYERS, A. I. Ch. E. Journal 10 (1964) Nr. 4, 437—44.

Ferner ist bekannt, zur bildmäßigen Aufzeichnung von Flüssigkeitsströmungen entlang fester Oberflächen die Ausfällung schwer löslicher Substanzen innerhalb einer gelatinösen Schicht in der Strömungsflüssigkeit heranzuziehen (DE-A-2 102 584). Als geeignete Substanzen kommen Azofarbstoffe, Ferri- oder Ferrocyanide des Kupfers oder Eisens in Frage. Zur Untersuchung der Strömungsverhältnisse in fotografischen Verarbeitungsbädern wird das fotografische Material durch einen Film- oder Papierträger ersetzt, welcher mit einer gelatinösen Schicht überzogen ist.

Ein sich auf gasförmiges Fluid (zumeist Luft) beziehendes Verfahren zur Sichtbarmachung stationärer Strömungszustände auf photochemischem Wege verwendet Silberbromid enthaltende konfektionierte Photogelatine zur Darstellung der Grenzschicht (DE-C-2 133 834). Das Verfahren arbeitet mit photochemisch reaktiven Gasen, vor allem der Luft beigemischtem Schwefelwasserstoff. Dieser diffundiert in eine gequollene Fotogelatine und erzeugt ein Silbersulfidbild, das nachher durch Fixieren sichtbar gemacht wird.

Gemäß dem in der DE-B-2 133 835 beschriebenen Verfahren dienen zum chemischen Aufzeichnen von Grenzflächenströmungen anodisch oxidierte Oberflächen, wobei die durch den Gasstrom unterschiedlich veränderte Schicht eingefärbt wird. Es können ein- oder beidseitig oxidierte, ungefärbte oder mit einem geeigneten Aluminiumfarbstoff eingefärbte Aluminiumfolien eingesetzt werden. Die Folie, in deren Farbschicht die Strömungsprofile eingeschrieben sind, können nach dem Chemigraphieren wieder von den Objektoberflächen abgezogen werden.

Aufgabe der Erfindung ist das Aufzeichnen von Strömungsgrenzschichten in flüssigen Medien, vorzugsweise in Wasser nach ihrer örtlichen relativen Dicke.

Die Aufgabe wird dadurch gelöst, daß erfindungsgemäß eine in der Ebene abwickelbare mit einem fotografischen Planfilm beklebte Oberfläche unter stationären Bedingungen mit dem flüssigen, ein gelöstes mit der Fotogelatineschicht reagierendes Agens enthaltendem Medium beströmt wird.

Beim Beströmen der beklebten Oberfläche unter stationären Bedingungen mit dem flüssigen Medium diffundiert — von der örtlichen Grenzschichtdicke gesteuert — ein in dem flüssigen Medium gelöstes Agens in die Fotogelatineschicht des Planfilmes und reagiert mit dem darin dispergierten Silberhalogenid. Je nach dem verwendeten Agens entsteht entweder unlösliches Silbersulfid oder Silber, wobei die Bildung von Silbersulfid zunächst nicht sichtbar sein kann durch überlagertes Silberbromid. Der nichtumgesetzte Rest des Silberhalogenids wird durch Fixieren entfernt.

Zur Durchführung des Verfahrens gemäß der Erfindung kann in einem flüssigen Medium, vor allem in einem wäßrigen Fluid, die Strömungsexposition in Gegenwart eines HS'-Ionen liefernden gelösten Agens vorgenommen werden. Geeignete Agenzien sind z. B. Natriumsulfid, Thioharnstoff und Thiosemicarbazid. Ganz besonders bewährt hat sich Thioacetamid. Die Expositionsbedingungen wie Dauer, Temperatur, Agenskonzentration und pH-Wert sind dabei so abzustimmen, daß bildhafte Darstellungen der Grenzschichtdickenverteilung entstehen. Das Diffundieren des Agens in die Schicht verläuft dabei durch dünne Strömungsgrenzschichten um ein Vielfaches schneller als im Ruhezustand. Statische Versuche liefern nur einen praktischen Anhaltspunkt. Der Schwärzungsgrad schwefelhaltiger Agenzien wurde in einigen Versuchsreihen an ruhender Folie untersucht. Die Schwärzung bzw. Bräunung wächst mit der Expositionsdauer, der Temperatur, der Agenskonzentration und dem pH-Wert. Dies zeigten Versuche mit Thioacetamidlösung. Bei etwa gleicher Schwefelmolarität von $1-2 \times 10^{-3}$ ergaben Natriumsulfid und insbesondere Thioacetamid gute Strömungsbilder. Thioharnstoff und Thiosemicarbazid wirken ähnlich. Bei Natriumsulfid erscheint der Bildkontrast schwächer als mit Thioacetamid. Durch erhöhten pH-Wert fällt z. B. Thioacetamid das Silbersulfid intensiver. Dies ergaben Versuche unter Natronlaugezusatz auf pH 11, verglichen mit neutraler Thioacetamidlösung.

Gemäß einer vorteilhaften Ausführungsform der Erfindung kann dem flüssigen Medium ein silberhalogenidlösendes Agens zugesetzt werden und nach Beströmung der in der Fotogelatineschicht vorhandene Rest des Silberhalogenids in Silber umgewandelt werden. Das Bild wird noch besser und dauerhaft sichtbar, wenn es mit Fotoentwickler zum Silberbild reduziert wird. Bei dem »Silberhalogenid-Silber-Verfahren« wird kolloidalverteiltes, schwer lösliches Silberhalogenid (bevorzugt Silberbromid) in den löslichen Thiosulfatkomplex umgesetzt. Die Strömungsgrenzschicht wird also zuerst durch teilweises Herauslösen von undurchsichtig machendem Silberhalogenid abgebildet. Für eine Expositionszeit von etwa 3 Minuten wird ein für Fotoabzüge gebrauchsfertiges Fixierbad fünffach weiter verdünnt. Längere Exposition erfordert noch stärkeres Verdünnen, um gute Grenzschichtbilder mit Dichten von 0,5—1 D zu gewinnen. Anschließend wird das Halogenidbild zum Silberbild reduziert.

Weitere geeignete komplexbildende Agenzien sind z. B. Alkalicyanid, -thiocyanat und Ammoniak. Diese Reagenzien zeichnen sich nicht allein durch eine längere Lebensdauer aus. Es bleibt auch die Wirkungsstärke der Lösungen lange unverändert erhalten. Bei dieser (schwefelfrei arbeitenden) Verfahrensweise ergibt sich die erforderliche diffuse Belichtung zur Silberkeimbildung beim Arbeiten bei Tageslicht von selbst.

Zur Durchführung des erfindungsgemäßen Verfahrens kann auch ein fotografischer Planfilm Verwendung finden, dessen Silbersalz zu Silber reduziert wird. In diesem Falle können die hiermit beklebten Oberflächen mit einem oxidierend und lösend wirkenden Agens beströmt werden. Es kann hierzu nach dem »Silberverfahren« die Fotogelatine mit einem organischen Reduktionsmittel behandelt werden, wobei ein primäres, von Silberhalogenid überlagertes, nicht sichtbares Silberbild entsteht, das nachfolgend durch ein Silberhalogenid lösendes Agens in das beständige Silberbild übergeführt wird. Gemäß einer weiteren besonders vorteilhaften Ausführungsform des Silberverfahrens wird der Silbersalzgehalt der Fotogelatineschicht zunächst gänzlich zu Silber reduziert. Zur Bilderzeugung wird mit Agenzien beströmt, die das Silber oxidieren und auflösen (fotografische Abschwächer). Hierbei entsteht sofort ein transparentes dauerhaftes Silberbild.

Geeignet oxidierend und lösend wirkende Agenzien für die bilderzeugende Strömungsexposition sind bekannte Abschwächer, beispielsweise Kaliumhexacyanoferrat (III) im Gemisch mit Thiosulfat und saures Permanganat.

Nach den Ausführungsformen gemäß der Erfindung entsteht eine transparente Schwarz-Weiß-Halbtondichteverteilung, deren örtliche Schwärzung ein Maß für die während der Beströmung herrschende örtliche Grenzschichtdikke darstellt.

Mit Hilfe des erfindungsgemäßen Verfahrens können in Strömungsmaschinen wie Pumpen, Kühlern für flüssige Medien insbesondere Wasser, Halbtonfotogramme von Grenzschichten über festen Flächen erhalten werden.

Nachfolgend wird das Verfahren am Beispiel der Prallkühlung einer Röntgenröhre erläutert.

Hierzu wurde das Prallflächenmodell mit dem Fotogelatineplanfilm beklebt und unter Verwendung einer thioacetamidhaltigen Lösung beströmt. Die verwendete Thioacetamid-Stammlösung wurde durch Lösen von 16 g Substanz pro Liter Wasser angesetzt (0,21 molar). Die Natronlauge zum Alkalisieren enthielt 80 g Natriumhydroxid pro Liter (2,0 molar).

Die Gebrauchslösung wurde durch Verdünnen von 250 ml Thioacetamid-Stammlösung und 180 ml Stammlauge auf 30 l hergestellt. Das Prallflächenmodell wurde je nach Durchlässigkeit der Düsen mit der vollen oder einer Teilmenge (herab bis 10 l) unter hydrostatischem oder geringem Überdruck so beströmt, daß Expositionszeiten von typisch 1 bis 3 Minuten entstanden. An den Düsenöffnungen betrug die Geschwindigkeit etwa 1 bis 3 m/s.

Auch nach dem Silberhalogenid-Silber-Verfahren wurde als Stammlösung handelsübliches Fixierbadkonzentrat benutzt. Die Gebrauchslösung wurde durch Verdünnen von 353 ml »Superfix« (TETENAL) auf 30 l angesetzt. Ansonsten wurde wie vorgeschrieben verfahren.

## Patentansprüche

1. Verfahren zum Aufzeichnen von Strömungsgrenzschichten in flüssigen Medien auf fotochemischem Wege, dadurch gekennzeichnet, daß in der Ebene abwickelbare, mit einem fotografischen Planfilm beklebte Oberflächen unter stationären Bedingungen mit den flüssigen, ein gelöstes mit der Fotogelatineschicht reagierendes Agens enthaltenden Medien beströmt werden.

2. Verfahren nach Anspruch 1, dadurch gekennzeichnet, daß im flüssigen Medium ein HS'-Ionen lieferndes Agens gelöst wird.

3. Verfahren nach Anspruch 2, dadurch gekennzeichnet, daß im flüssigen Medium Thioacetamid gelöst wird.

4. Verfahren nach Anspruch 1, dadurch gekennzeichnet, daß dem flüssigen Medium ein Silberhalogenid lösendes Agens zugesetzt wird.

5. Verfahren nach Anspruch 4, dadurch gekennzeichnet, daß Thiosulfat gelöst wird.

6. Verfahren nach Anspruch 1, dadurch gekennzeichnet, daß ein fotografischer Planfilm verwendet wird, dessen Silberionen zu Silber reduziert sind und daß mit einem oxidierend und lösend wirkenden Agens beströmt wird.

7. Verfahren nach Anspruch 1, dadurch gekennzeichnet, daß die Silbersalze des fotografischen Planfilms beim Beströmen durch organische Reduktionsmittel teilweise zu Silber reduziert und das überschüssige Silbersalz durch Silberhalogenid lösende Agenzien gelöst wird.

## Claims

1. A process for photochemically recording flow boundary layers in liquid media, characterized in that surfaces which can be unrolled flat and which are covered with a flat photographic film are swept under stationary conditions with a stream of the liquid media, which contain in solution an agent which reacts with the photogelatine layer.

2. A process according to claim 1, characterized in that an agent which produces HS'-ions is dissolved in the liquid medium.

3. A process according to claim 2, characterized in that thioacetamide is dissolved in the liquid medium.

4. A process according to claim 1, characterized in that an agent which dissolves a silver halogenide is added to the liquid medium.

5. A process according to claim 4, characterized in that thiosulphate is dissolved.

6. A process according to claim 1, characterized in that a flat photographic film is used, the silver ions of which are reduced to silver, and is swept with a stream of an agent having an oxidizing and dissolving action.

7. A process according to claim 1, characterized in that the silver salts of the flat photographic film are partially reduced to silver by sweeping with a stream of organic reducing agent, and the excess silver salt is dissolved by means of agents which dissolve silver halogenide.

## Revendications

1. Procédé pour enregistrer des couches limites d'écoulement dans des milieux liquides par voie photochimique, caractérisé par le fait qu'on fait circuler, dans des conditions stationnaires, sur des surfaces pouvant être déployées, dans le pan et encollées d'une pellicule plane photographique, le milieu liquide contenant un agent dissous réagissant avec la couche de photogélatine.

2. Procédé suivant la revendication 1, caractérisé par le fait qu'on dissout dans le milieu liquide un agent fournissant des ions HS.

3. Procédé suivant la revendication 2, caractérisé par le fait qu'on dissout du thio-acétamide dans le milieu liquide.

4. Procédé suivant la revendication 1, caractérisé par le fait qu'on ajoute au milieu liquide un agent dissolvant l'halogénure d'argent.

5. Procédé suivant la revendication 4, caractérisé par le fait que l'on dissout du thiosulfate.

6. Procédé suivant la revendication 1, caractérisé par le fait qu'on utilise une pellicule photographique plane, dont les ions argent sont réduits en argent et qu'on fait s'écouler sur cette pellicule un agent ayant une action oxydante et dissolvante.

7. Procédé suivant la revendication 1, caractérisé par le fait qu'on réduit partiellement en argent les sels d'argent de la pellicule photographique plane en faisant s'écouler sur cette dernière un agent organique réducteur et qu'on dissout le sel d'argent ex excès au moyen d'agents dissolvant l'halogénure d'argent.